# EUROPÄISCHE PATENTANMELDUNG

(11) **EP 2 671 659 A2**
(43) Veröffentlichungstag der Anmeldung: **11.12.2013**
(21) Anmeldenummer: 13170072.6
(22) Anmeldetag: 31.05.2013
(51) Int. Cl.: B23H 1/04, B23H 7/26, B23H 9/14

(54) **Funkenerosions-Werkzeug und Elektrode für ein Funkenerosions-Werkzeug sowie Verfahren zur Herstellung eines funkenerodierten Lochs**

(30) Priorität: 04.06.2012 AT 6402012
(71) Anmelder: SCHOELLER-BLECKMANN Oilfield Technology GmbH, 2630 Ternitz (AT)
(72) Erfinder: Metzner, Klaus, 2700 Wiener Neustadt (AT)
(74) Vertreter: Burger, Hannes

(57) **Zusammenfassung**

Es wird ein Funkenerosions-Werkzeug (101, 102) angegeben, welches eine auf einer Werkzeuglängsachse (2) angeordnete Elektrode (301, 302) und einen entlang der Werkzeuglängsachse (2) ausgerichteten und auf dieser angeordneten sowie mit der Elektrode (301, 302) verbundenen Elektrodenhalter (401..417) umfasst. Der Elektrodenhalter (401..417) umfasst Mittel zum Bewegen der Elektrode (301, 302) gegenüber dem Elektrodenhalter (401..417) sowie Mittel (6, 11, 12, 13, 15) zum Aufbringen eines quer zur Werkzeuglängsachse (2) wirkenden Drucks im Bereich eines gedachten, sich in der Werkzeuglängsachse (2) erstreckenden Schlauches (7), welcher einem im Wesentlichen der Elektrode (301, 302) entsprechenden Querschnitt aufweist. Weiterhin wird ein Verfahren angegeben, wie das Funkenerosions-Werkzeug (101, 102) verwendet werden kann. Zudem wird eine Elektrode (302) für ein Funkenerosions-Werkzeug mit einer Zylinderoberfläche oder einer Kugeloberfläche angegeben, in welcher wenigstens eine mit einer Bohrung (36) verbundene Nut (35) angeordnet ist. Schließlich wird ein Verfahren zur Herstellung einer Ausweichbohrung (48) in einem Bohrstrangteil (47) angegeben, welche zwei gerade Spülbohrungen (39, 41) verbindet und welche bogenförmig verlaufend durch Funkenerosion hergestellt wird.

## Beschreibung

Die Erfindung betrifft ein Funkenerosions-Werkzeug, umfassend eine auf einer Werkzeuglängsachse angeordnete Elektrode und einen entlang der Werkzeuglängsachse ausgerichteten und auf dieser angeordneten sowie mit der Elektrode verbundenen Elektrodenhalter. Der Elektrodenhalter weist dabei Mittel zum Bewegen der Elektrode gegenüber dem Elektrodenhalter auf. Weiterhin betrifft die Erfindung eine Elektrode für ein Funkenerosions-Werkzeug sowie ein Verfahren zur Herstellung eines funkenerodierten Lochs mit Hilfe eines Funkenerosions-Werkzeugs der genannten Art. Darüber hinaus betrifft die Erfindung auch eine Verwendung eines solchen Funkenerosions-Werkzeugs sowie ein Verfahren zur Herstellung einer Ausweichbohrung in einem Bohrstrangteil, welche zwei gerade Spülbohrungen mit parallelen Achsen und insbesondere in einer Achse verlaufende Spülbohrungen verbindet.

Funkenerosions-Werkzeuge der genannten Art sind prinzipiell bekannt. Beispielsweise zeigt die JP 2001-205523 A dazu ein Funkenerosions-Werkzeug mit einer Elektrode, welche an einem spiralfeder-artigen Träger befestigt ist, beziehungsweise an einem Träger, welcher aus mehreren untereinander gelenkig verbundenen Einzelsegmenten besteht. Mit Hilfe dieses Trägers kann die Elektrode in ein Bohrloch geschoben und darin auch ausgelenkt werden, um bogenförmige Bohrungen herstellen zu können.

Weiterhin zeigt die JP 2003-136343 A ein weiteres Funkenerosions-Werkzeug mit einer Elektrode, welche an einem Träger befestigt ist, welcher aus mehreren untereinander gelenkig verbundenen Einzelsegmenten besteht. Mit Hilfe dieses Werkzeugs können bogenförmige und insbesondere auch spiralförmige Bohrungen hergestellt werden.

Darüber hinaus zeigt die WO 00/54918 A1 ein Funkenerosions-Werkzeug mit einer Elektrode, welche an einem Träger befestigt ist, welcher aus einem biegsamen Material mit mehreren Einschnitten besteht.

Schließlich zeigt die DE 129 3 001 B ein Funkenerosions-Werkzeug mit einer Elektrode, welche an einem Jalousie-artigen beziehungsweise Rollladen-artigen Träger befestigt ist. Mit diesem Werkzeug können beispielsweise Schlitze mit einem wellenförmigen Verlauf hergestellt werden.

Zwar ermöglichen die bekannten Funkenerosions-Werkzeug die Herstellung von bogenförmig verlaufenden Ausnehmungen, jedoch sind sie jeweils an einen speziellen Einsatzzweck angepasst. Des Weiteren sind die bekannten Funkenerosions-Werkzeuge nur für vergleichsweise seichte Bohrungen einsetzbar.

Die Aufgabe der Erfindung ist es daher, ein verbessertes Funkenerosions-Werkzeug anzugeben, insbesondere eines, das universell und im Speziellen auch für tiefe Bohrungen einsetzbar ist. Die Aufgabe der Erfindung ist es weiterhin, ein verbessertes Verfahren zur Herstellung eines funkenerodierten Lochs anzugeben. Insbesondere soll das Verfahren universell anwendbar sein und das Anfertigen tiefer Bohrungen ermöglichen.

Die Aufgabe der Erfindung wird mit einem Funkenerosions-Werkzeug der eingangs genannten Art gelöst, bei dem der Elektrodenhalter Mittel zum Aufbringen eines quer zur Werkzeuglängsachse wirkenden Drucks im Bereich eines gedachten, sich in der Werkzeuglängsachse erstreckenden Schlauches mit einem im Wesentlichen der Elektrode entsprechenden Querschnitt umfasst.

Die Aufgabe der Erfindung wird weiterhin mit einem Verfahren zur Herstellung eines funkenerodierten Lochs mit Hilfe einer auf einer Werkzeuglängsachse angeordnete Elektrode sowie einem entlang der Werkzeuglängsachse ausgerichteten und auf dieser angeordneten sowie mit der Elektrode verbundenen Elektrodenhalter gelöst, umfassend die Schritte:
a) Fixieren des Elektrodenhalters durch Aufbringen eines quer zur Werkzeuglängsachse wirkenden Drucks in einer sich in der Werkzeuglängsachse erstreckenden Öffnung, welche einem im Wesentlichen der Elektrode entsprechenden Querschnitt aufweist,
b) Einschalten der Erosionsspannung
c) Bewegen der Elektrode gegenüber dem Elektrodenhalter auf eine Bearbeitungsfront zu,
d) Abschalten der Erosionsspannung
e) Bewegen der Elektrode gegenüber dem Elektrodenhalter von der Bearbeitungsfront weg,
f) Lösen des Elektrodenhalters durch Senken des genannten, quer zur Werkzeuglängsachse wirkenden Drucks,
g) Bewegen des Elektrodenhalters in Richtung der Bearbeitungsfront und wiederholen der Schritte a) bis g).

Im Gegensatz zu bekannten Verfahren zur Herstellung eines funkenerodierten Lochs wird bei der Erfindung ein Elektrodenhalter (im Bohrloch) fixiert und dann die Elektrode von diesem Bezugspunkt aus weiter bewegt. Auf diese Weise kann auf die Gestaltung der Bohrung sehr flexibel Einfluss genommen und die Bohrung mit nur geringen Toleranzen hergestellt werden. Insbesondere kann der Verlauf der Bohrung leicht korrigiert werden, wenn das Werkzeug auf unerwartete Weise "verlaufen" sollte. Insgesamt ist das vorgestellte Funkenerosions-Werkzeug damit deutlich universeller einsetzbar als bekannte Funkenerosions-Werkzeuge, vor allem weil mit dem vorgestellten Funkenerosions-Werkzeug prinzipiell sehr tiefliegende Bohrungen mit beliebigem räumlichem Verlauf hergestellt werden können. Der Vollständigkeit halber wird schließlich noch angemerkt, dass die Schritte e) und g) im oben genannten Verfahren auch simultan ausgeführt werden können und nicht notwendigerweise hintereinander ausgeführt werden müssen.

Eine vorteilhafte Variante des Verfahrens zur Herstellung eines funkenerodierten Lochs ist gegeben, wenn vor Schritt a) ein Hilfskörper mit einer sich in der Werkzeuglängsachse erstreckenden Öffnung, welche einem im Wesentlichen der Elektrode entsprechenden Querschnitt aufweist, im Bereich des herzustellenden Lochs fixiert und der Elektrodenhalter in der genannten Öffnung mit zum Werkstück weisender Elektrode positioniert wird. Auf diese Weise kann das Funkenerosions-Werkzeug ausgerichtet werden, bevor der eigentliche Bohrvorgang beginnt.

Besonders vorteilhaft ist es, wenn die hergestellte Bearbeitungskontur anschließend an das Funkenerodieren durch beliebige spanende oder nicht spanende Bearbeitungsverfahren weiterbearbeitet bzw. veredelt wird. Dadurch können beispielsweise Mikrorisse, die bei der Funkenerosion entstehen können, beseitigt und eine besonders hohe Oberflächengüte erreicht werden.

Der beim Funkenerosions-Werkzeug erwähnte gedachte Schlauch (auch gedachtes Rohr oder Mantel eines Rohres) fällt bei der Verwendung des Funkenerosions-Werkzeugs mit dem im Werkstück durch die Elektrode angefertigten Loch zusammen. Alternativ oder zusätzlich wird die Aufgabe der Erfindung daher auch mit einem Funkenerosions-Werkzeug der eingangs genannten Art gelöst, bei dem der Elektrodenhalter Mittel zum Aufbringen eines quer zur Werkzeuglängsachse wirkenden Drucks auf die Wandung eines durch die Elektrode angefertigten Lochs umfasst.

Generell spricht man beim Funkenerodieren vom Herstellen einer "Bohrung" obwohl in der Regel dazu kein rotierendes Werkzeug eingesetzt wird und auch obwohl das Material beim Abtrag nicht zerspant wird. Im Rahmen der Erfindung werden die Begriffe "Bohrung" und "Loch" daher synonymisch gebraucht. Weiterhin wird angemerkt, dass die Bohrung beim Funkenerodieren nicht notwendigerweise einen kreisförmigen Querschnitt aufweist. Beispielsweise kann die Bohrung auch polygonförmigen oder ellipsenförmigen Querschnitt aufweisen. Der oben erwähnte gedachte Schlauch/das gedachte Rohr ist dann demzufolge ein Profilschlauch/ein Profilrohr.

Ein weiterer Aspekt der Aufgabe der Erfindung besteht darin, eine Elektrode für ein Funkenerosions-Werkzeug anzugeben, bei welcher das Schwenken derselben um eine quer zur Werkzeuglängsachse angeordnete Drehachse und damit eine Änderung der Erodierrichtung besonders leicht erfolgen kann und auch ein hoher Materialabtrag ermöglicht wird.

Diese Aspekt der Aufgabe wird durch eine Elektrode für ein Funkenerosions-Werkzeug, insbesondere für ein Funkenerosions-Werkzeug der zuvor genannten Art oder als Bestandteil desselben, gelöst, umfassend:
- einen einer Bearbeitungsfront zugewandten Abschnitt mit einer Zylinderoberfläche oder einer Kugeloberfläche,
- wenigstens eine in diesem Abschnitt angeordnete Nut, welche von einem Mittelbereich des Abschnitts zum Rand desselben verläuft und
- wenigstens eine Bohrung, welche eine der Bearbeitungsfront abgewandte Seite der Elektrode mit der wenigstens einen Nut verbindet.

Generell kann eine Elektrode mit einem kugelförmigen Abschnitt universell eingesetzt werden, da diese um jede beliebige Achse geschwenkt werden kann. Eine Elektrode mit einem zylinderförmigen Abschnitt wird vorzugsweise dann eingesetzt, wenn diese nur um eine Drehachse geschwenkt werden kann, wobei die genannte Drehachse und die Achse des Zylinders parallel ausgerichtet oder identisch sind. Aufgrund der genannten Maßnahmen wird das Schwenken der Elektrode um eine quer zur Werkzeuglängsachse angeordnete Drehachse erleichtert. Zudem kann das abgetragene Material mit Hilfe eines über die genannten Bohrungen zugeführten und durch die Nut fließenden Fluids abgeführt werden, wodurch ein hoher Materialabtrag ermöglicht wird.

Vorteilhaft ist es bei einer Elektrode auch, wenn der Radius des zylindrischen oder kugelförmigen Abschnitts kleiner gleich dem Abstand zwischen der Drehachse der Elektrode und der Oberfläche des zylindrischen oder kugelförmigen Abschnitts ist. Auf diese gleitet die Elektrode beim Schwenken entlang einer bereits im Werkstück hergestellten Öffnung, das heißt entlang ihrer Bearbeitungsfront. Ist die Elektrode gegenüber dem Drehpunkt entlang der Werkzeuglängsachse verschiebbar, so ist der Radius des zylindrischen oder kugelförmigen Abschnitts dazu vorzugsweise kleiner gleich dem kleinsten Abstand zwischen der Drehachse der Elektrode und der Oberfläche des zylindrischen oder kugelförmigen Abschnitts.

Vorteilhaft ist es zudem, wenn der zylindrische oder kugelförmige Abschnitt der Elektrode in seinem Randbereich eine wenigstens bis zur Grenze der Bearbeitungsfront reichende Abrundung umfasst, welche einen Radius aufweist, der kleiner ist als der der Radius des zylindrischen oder kugelförmigen Abschnitts. Auf diese Weise wird die Herstellung bogenförmig verlaufender Bohrungen ohne Querriefen oder mit Querriefen lediglich geringer Tiefe ermöglicht.

Ein weiterer Aspekt der Aufgabe der Erfindung besteht nun schließlich darin, eine vorteilhafte Verwendung eines Funkenerosions-Werkzeugs anzugeben. Insbesondere soll ein vorteilhaftes Verfahren zur Herstellung einer Ausweichbohrung in einem Bohrstrangteil angegeben werden, welche zwei gerade Spülbohrungen mit parallelen Achsen und insbesondere in einer Achse verlaufende Spülbohrungen verbindet. Unter anderem sollen Nachteile hinsichtlich der mechanischen und hydraulischen Eigenschaften des Bohrstrangteils, wie sie sich nach dem Stand der Technik hergestellten Verfahren resultieren, vermieden werden.

Dieser Aspekt der Aufgabe wird durch ein Verfahren zur Herstellung einer Ausweichbohrung in einem Bohrstrangteil, welche zwei gerade Spülbohrungen mit parallelen Achsen und insbesondere in einer Achse verlaufende Spülbohrungen verbindet, gelöst, bei dem die Ausweichbohrung bogenförmig verlaufend durch Funkenerosion hergestellt wird.

Die mechanischen und hydraulischen Eigenschaften des Bohrstrangteils werden damit insgesamt verbessert.

Besonders gut lässt sich eine solche Ausweichbohrung durch Verwendung eines Funkenerosions-Werkzeug der oben genannten Art herstellen, da ein Bohrstrangteil üblicherweise einige Meter lang ist und die Spülbohrungen dementsprechend weit in das Bohrstrangteil hineinragen. Durch einen Elektrodenhalter ist es nämlich möglich, das Funkenerosions-Werkzeug auch tief im Inneren eines Bohrstrangteils sicher zu fixieren und die Elektrode in einem engen Toleranzbereich zu bewegen.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn das Funkenerosions-Werkzeug Mittel zum Variieren eines Querschnitts des Elektrodenhalters quer zur Werkzeuglängsachse umfasst. Auf diese Weise können unterschiedliche Formen und/oder Größen des von der Elektrode hergestellten Lochs beim Fixieren des Elektrodenhalters ausgeglichen werden.

Vorteilhaft ist es in diesem Zusammenhang, wenn die Mittel zum Variieren eines Querschnitts des Elektrodenhalters und zum Aufbringen eines quer zur Werkzeuglängsachse wirkenden Drucks durch ausfahrbare und/oder ausschwenkbare Klemmelemente/Krallen gebildet sind. Auf diese Weise ist eine genaue Positionierung innerhalb der Bohrung möglich. Insbesondere ist es denkbar, dass die Klemmelemente/Krallen zu diesem Zweck einzeln ansteuerbar sind.

Vorteilhaft ist es in diesem Zusammenhang weiterhin, wenn ein Gehäuse des Elektrodenhalters elastisch ist und die Klemmelemente/Krallen durch dieses Gehäuse hindurch wirken. Auf diese Weise können die Klemmelemente/Krallen gut vor Verschmutzung geschützt werden. Vorteilhaft ist es weiterhin, wenn die Mittel zum Variieren eines Querschnitts des Elektrodenhalters und zum Aufbringen eines quer zur Werkzeuglängsachse wirkenden Drucks durch einen pneumatisch oder hydraulisch betätigten Balg/Schwellkörper gebildet sind. Dadurch kann die Klemmung vergleichsweise großflächig erfolgen, wodurch Oberflächenungenauigkeiten der Bohrung, wie zum Beispiel Riefen und dergleichen, keinen großen Einfluss auf die Klemmwirkung haben.

Besonders vorteilhaft ist es, wenn der Elektrodenhalter Mittel zu seiner Fortbewegung umfasst. Dadurch ist es möglich, den Elektrodenhalter innerhalb einer Bohrung zu bewegen, ohne dass dazu ein nach außen geführtes Gestänge notwendig wäre.

Vorteilhaft ist es in diesem Zusammenhang, wenn die Fortbewegungsmittel durch angetriebene Räder gebildet sind. Dadurch kann der Elektrodenhalter gut in der Bohrung bewegt werden. Bei entsprechender Ausbildung der Räder können diese auch als Mittel zum Aufbringen eines quer zur Werkzeuglängsachse wirkenden Drucks auf die Wandung eines durch die Elektrode angefertigten Lochs fungieren. sodass diese dann einen Doppelnutzen erbringen.

Vorteilhaft ist es weiterhin, wenn der Elektrodenhalter zumindest zwei, in der Werkzeuglängsachse gegeneinander bewegbare Segmente umfasst, die jeweils Mittel zum Aufbringen eines quer zur Werkzeuglängsachse wirkenden Drucks beziehungsweise zum Variieren eines Querschnitts des Elektrodenhalters aufweisen. Bei dieser Variante weist der Elektrodenhalter also ein vorderes und ein hinteres Segment auf, welche abwechselnd in der durch die Elektrode angefertigten Bohrung fixiert werden. Zwischen dem abwechselnden Fixieren wird der Abstand zwischen den beiden Segmenten vergrößert oder verringert, sodass sich der Elektrodenhalter in der Bohrung bewegen kann.

Günstig ist es, wenn das Funkenerosions-Werkzeug einen entlang der Werkzeuglängsachse ausgerichteten biegsamen, stangenförmigen oder rohrförmigen Vorschubkörper umfasst, welcher mit dem Elektrodenhalter verbunden ist. Auf diese Weise kann der Elektrodenhalter innerhalb der Bohrung bewegt werden, ohne dass dieser dazu einen eigenen Antrieb aufweisen müsste. Der Aufbau des Funkenerosions-Werkzeugs ist damit besonders einfach.

Vorteilhaft ist es in diesem Zusammenhang, wenn der Vorschubkörper mehrere starre und entlang der Werkzeuglängsachse angeordnete Segmente umfasst, welche untereinander beweglich verbunden sind. Dadurch kann der Vorschubkörper robust aufgebaut werden, das heißt mit Segmenten aus einem widerstandsfähigen und harten Material, bleibt aber dennoch beweglich.

Von Vorteil ist es dabei, wenn die Segmente über quer zur Werkzeuglängsachse ausgerichtete Drehachsen drehbar miteinander verbunden sind, insbesondere wenn alle Drehachsen normal zur Werkzeuglängsachse und untereinander parallel ausgerichtet sind oder alle Drehachsen normal zur Werkzeuglängsachse ausgerichtet sind, wobei zwei benachbarte Drehachsen um jeweils einen Winkel α verdreht sind. Bei der ersten Variante kann der Vorschubkörper demzufolge in einer Ebene bewegt werden. Dieser eignet sich somit für Bohrungen, welche in einer Ebene verlaufen. Die zweite Variante eignet sich dagegen auch für räumlich verlaufende Bohrungen. Insbesondere können die Drehachsen um jeweils 90° verdreht sein, sodass sich der Vorschubkörper aus einer Reihe von untereinander kardanisch verbundenen Segmenten zusammensetzt. Beträgt der Winkel α weniger als 90°, so kann ein solcher Vorschubkörper insbesondere zur Herstellung von schraubenlinien-förmig verlaufenden Bohrungen verwendet werden.

Vorteilhaft ist es, wenn der Vorschubkörper entlang der Werkzeuglängsachse eine konstante Länge aufweist. Auf diese Weise kann der am Vorschubkörper befestigte Elektrodenhalter beziehungsweise auch die Elektrode gut im Bohrloch bewegt werden, da eine Verschiebung des Vorschubkörpers im Wesentlichen einer Verschiebung des Elektrodenhalters beziehungsweise auch der Elektrode entspricht.

Günstig ist es darüber hinaus, wenn die Elektrode gegenüber dem Elektrodenhalter in der Werkzeuglängsachse und/oder quer dazu bewegbar ist. Dadurch ist einerseits eine Vorschubbewegung der Elektrode möglich, andererseits aber auch eine Bewegung, um den Verlauf der Bohrung abzulenken.

Vorteilhaft ist es zudem, wenn die Elektrode gegenüber dem Elektrodenhalter drehbar ist, wobei die Drehachse quer zur Werkzeuglängsachse ausgerichtet ist. Auf diese Weise kann die Elektrode aus der Achse der (bereits bestehenden) Bohrung ausgeschwenkt werden, um einen bogenförmigen Verlauf der weiteren Bohrung zu erzielen.

Günstig ist es auch, wenn die Elektrode gegenüber dem Elektrodenhalter drehbar ist, wobei die Drehachse parallel zur Werkzeuglängsachse ausgerichtet ist oder mit dieser zusammenfällt. Auf diese Weise können beispielsweise Bohrungen mit nicht kreisförmigem Querschnitt angefertigt werden, deren Querschnittsform sich entlang der Längsachse der Bohrung schraubenförmig dreht. Zudem ist es auch möglich, eine Schwenkmechanik für die Elektrode in eine vorgebbare Richtung zu drehen, um die Bohrung in gewünschter Weise abzulenken. Schließlich ist es auch von Vorteil, die Elektrode um eine parallel zur Werkzeuglängsachse ausgerichtete oder mit dieser zusammen fallende Drehachse zu drehen, wenn die Elektrode auf der der Bearbeitungsfront zugewandten Seite Nuten zum Ausspülen abgetragenen Materials aufweist. Durch die genannte Drehung kann das Material trotz der Nuten in der Elektrode gleichmäßig abgetragen werden.

Günstig ist es weiterhin, wenn die Mittel zum Bewegen der Elektrode gegenüber dem Elektrodenhalter durch wenigstens einen mit der Elektrode verbunden Aktuator aus der Gruppe: pneumatischer Aktuator, hydraulischer Aktuator, Piezo-Aktuator, elektromechanischer Aktuator - jeweils als Linear- oder Rotationsmotor ausgeführt - gebildet sind. Dadurch stehen erprobte und bewährte Mittel zur Bewegung der Elektrode zur Verfügung. Das Funkenerosions-Werkzeug kann somit mit vergleichsweise geringem Aufwand in die Realität umgesetzt werden.

Vorteilhaft ist es, wenn die Mittel zum Bewegen der Elektrode gegenüber dem Elektrodenhalter durch Seilzüge gebildet sind, welcher mit der Elektrode verbunden sind. Dadurch ist es möglich, die Elektrode mit nur geringem technischen Aufwand außerhalb des Bohrlochs zu steuern.

Günstig ist es, wenn das Funkenerosions-Werkzeug im Bereich der Werkzeuglängsachse angeordnete und mit dem Elektrodenhalter verbundene Schleppleitungen umfasst, welche der elektrischen Versorgung der Elektrode und/oder der energetischen Versorgung des Elektrodenhalters und/oder der Übermittlung von Steuersignalen an den Elektrodenhalter dient. Insbesondere können die Schleppleitungen durch ein elektrisches Kabel sowie durch Schläuche eines pneumatischen oder hydraulischen Systems gebildet sein. Auf diese Weise kann die zum Betrieb des Funkenerosions-Werkzeugs nötige Energie auf einfache Weise zum Elektrodenhalter befördert werden. Zudem ist eine Einflussnahme auf den Bohrvorgang von außen möglich, wenn die Leitungen auch der Übermittlung von Steuersignalen an den Elektrodenhalter dienen.

Besonders vorteilhaft ist es schließlich, wenn ein Gehäuse des Elektrodenhalters flexibel ist und ein innerer Aufbau desselben mehrere in sich starre Segmente umfasst, welche zueinander beweglich sind und in welchen die Mittel zum Aufbringen eines quer zur Werkzeuglängsachse wirkenden Drucks und/oder die Mittel zum Bewegen der Elektrode gegenüber dem Elektrodenhalter und/oder eine Steuerung der genannten Mittel, insbesondere eine elektronische Steuerung, angeordnet sind. Auf diese Weise kann sich der Elektrodenhalter besonders gut einem Verlauf der Bohrung anpassen. Dennoch ist die Verwendung von (in der Regel) starren Standardkomponenten für den inneren Aufbau möglich. Beispielsweise umfassen diese Antriebsmotoren sowie Leiterplatten mit darauf angeordneten Steuer- und/oder Kommunikationseinheiten. Anstelle des schlauchartigen Gehäuses kann dieses auch durch mehrere untereinander gelenkig verbundene, starre Segmente gebildet sein. Da die Grenzen zum Vorschubkörper hier fließend sind, ist eine strikte Unterteilung in Vorschubkörper und Elektrodenhalter nicht immer gerechtfertigt. Denkbar ist daher auch, dass diese mehr oder minder eine bauliche Einheit bilden.

Zum besseren Verständnis der Erfindung wird diese anhand der nachfolgenden Figuren näher erläutert. Es zeigen
- Fig. 1: eine schematische Darstellung eines Funkenerosions-Werkzeugs mit ausfahrbaren Platten im Elektrodenhalter;
- Fig. 2: eine schematische Darstellung eines Elektrodenhalters mit ausschwenkbaren Krallen;
- Fig. 3: eine schematische Darstellung eines Elektrodenhalters mit einem Balg/Schwellkörper zur Fixierung des Elektrodenhalters;
- Fig. 4: wie Fig. 3 nur mit rückwärtig angeordnetem Balg/Schwellkörper;
- Fig. 5: eine schematische Darstellung eines Elektrodenhalters mit angetriebenen Rädern;
- Fig. 6: wie Fig. 5 nur mit vorne und hinten angeordnetem Rädern;
- Fig. 7: eine schematische Darstellung eines Elektrodenhalters mit zwei zueinander beweglichen und unabhängig voneinander fixierbaren Segmenten;
- Fig. 8: wie Fig. 7 nur mit einem Spindelantrieb anstelle des Hydraulik-/Pneumatikzylinders;
- Fig. 9: eine schematische Darstellung eines Elektrodenhalters mit einem flexiblen Gehäuse und einem segmentierten inneren Aufbau;
- Fig. 10: eine schematische Darstellung eines Elektrodenhalters mit Klemmelementen/Krallen, welche unter einem elastischen Gehäuse angeordnet sind;
- Fig. 11: ein Beispiel für einen Vorschubkörper, welcher durch einen biegsamen Schlauch gebildet ist;
- Fig. 12: ein weiteres Beispiel für einen Vorschubkörper, welcher durch mehrere untereinander beweglich verbundene Segmente gebildet ist;
- Fig. 13: Beispiele für die Anordnung der Drehachsen des in Fig. 12 dargestellten Vorschubkörpers;
- Fig. 14: eine schematische Darstellung eines Elektrodenhalters mit einer seriellen Kinematik zur Bewegung der Elektrode;
- Fig. 15: eine schematische Darstellung eines Elektrodenhalters mit einer parallelen Kinematik zur Bewegung der Elektrode;
- Fig. 16: wie Fig. 15 nur mit ausgeschwenkter Elektrode;
- Fig. 17: wie Fig. 15 nur mit Seilzügen anstelle von Hydraulik-/Pneumatikzylindern;
- Fig. 18: eine schematische Darstellung eines Elektrodenhalters mit einer Ausschwenkmechanik für eine Schwenkbewegung der Elektrode in einer Ebene;
- Fig. 19: wie Fig. 18 nur erweitert mit einem Drehantrieb für die Elektrode;
- Fig. 20: wie Fig. 18 nur erweitert mit einem Linearvorschub für die Elektrode;
- Fig. 21: wie Fig. 20 nur mit Seilzügen anstelle von Hydraulik-/Pneumatikzylindern;
- Fig. 22: ein Werkstück vor der Bearbeitung mit einem Funkenerosions-Werkzeug;
- Fig. 23: wie Fig. 22 nur mit ausgefahrener Elektrode des Funkenerosions-Werkzeugs;
- Fig. 24: wie Fig. 23 nur mit weiter bewegtem Elektrodenhalter;
- Fig. 25: wie Fig. 24 nur mit ausgefahrener Elektrode;
- Fig. 26: das Werkstück mit tief eingedrungenem Funkenerosions-Werkzeug;
- Fig. 27: eine beispielhafte Elektrode in Detailansicht und
- Fig. 28: ein beispielhaftes Bohrstrangteil mit einer Ausweichbohrung, welche mit einem Funkenerosions-Werkzeug hergestellt wurde.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

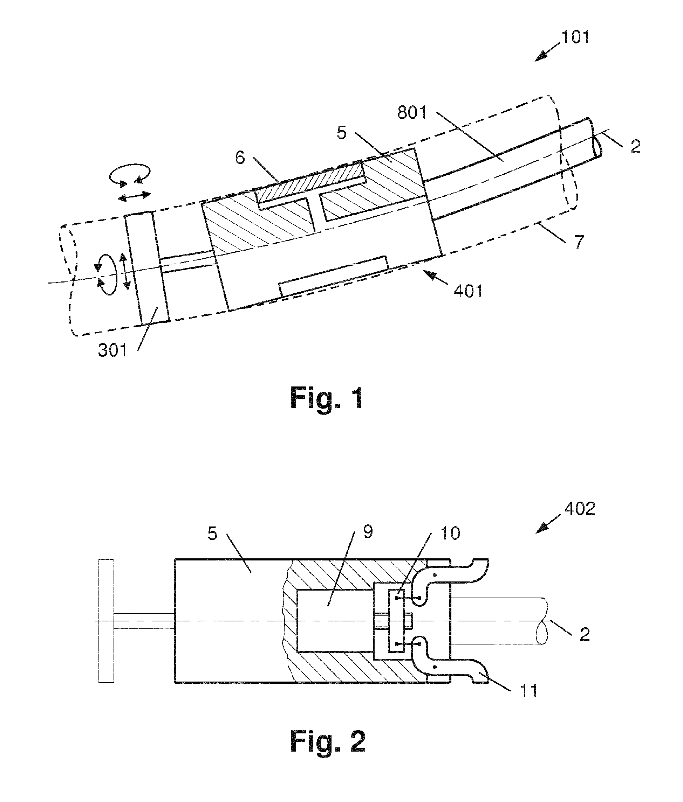

Fig. 1 zeigt schematisch eine erste Variante eines Funkenerosions-Werkzeugs 101, umfassend eine auf einer Werkzeuglängsachse 2 angeordnete Elektrode 301 und einen entlang der Werkzeuglängsachse 2 ausgerichteten und auf dieser angeordneten sowie mit der Elektrode 301 verbundenen Elektrodenhalter 401. Der Elektrodenhalter 401 umfasst in der Fig. 1 nicht näher dargestellte Mittel zum Bewegen der Elektrode 301 gegenüber dem Elektrodenhalter 401.

Prinzipiell sind Bewegungen der Elektrode 301 gegenüber dem Elektrodenhalter 401 in allen sechs Freiheitsgraden denkbar, das heißt Bewegungen in der x-, y- und z-Achse sowie Drehungen um die genannten Achsen. In der Fig. 1 sind einige dieser Möglichkeiten mit Pfeilen visualisiert.

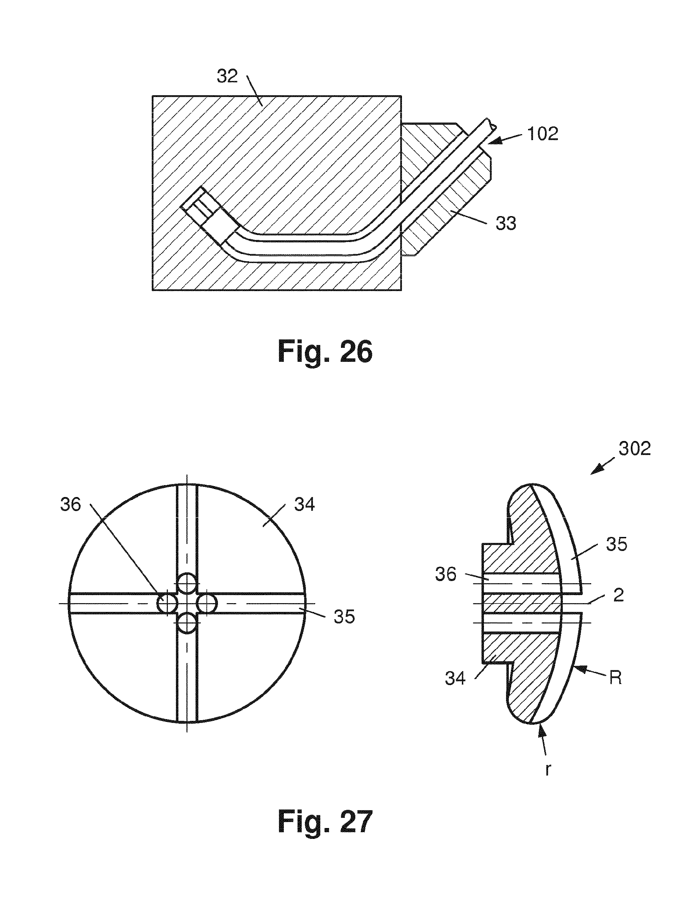

Der Elektrodenhalter 401 umfasst weiterhin Mittel 6 zum Aufbringen eines quer zur Werkzeuglängsachse 2 wirkenden Drucks im Bereich eines gedachten, sich in der Werkzeuglängsachse 2 erstreckenden Schlauches 7 mit einem im Wesentlichen der Elektrode 301 entsprechenden Querschnitt. Dieser gedachte Schlauch 7 ist in der Fig. 1 strichliert dargestellt. Äquivalent kann der gedachte Schlauch auch als gedachtes Rohr oder Mantel eines Rohres aufgefasst werden. Ist das Funkenerosions-Werkzeug 101 in Betrieb, so fällt der genannten Schlauch 7 mit der von der Elektrode 301 angefertigten Bohrung zusammen (siehe hierzu beispielsweise auch Fig. 26).

Die Mittel zum Aufbringen eines quer zur Werkzeuglängsachse 2 wirkenden Drucks sind in diesem Beispiel konkret durch Platten 6 gebildet, welche in einem Grundkörper 5 gelagert sind, wodurch ein pneumatisch oder hydraulisch betätigter Aktuator realisiert wird. Wird der Druck in der Hohlkammer im Grundkörper 5 erhöht, so werden die Platten 6 dementsprechend nach außen gedrückt. Darüber hinaus können die Platten 6 auch zum Variieren des Querschnitts des Elektrodenhalters quer zur Werkzeuglängsachse 2 dienen, indem sie aus- oder eingefahren werden. Auf diese Weise können Toleranzen des durch die Elektrode 301 hergestellten Lochs, beziehungsweise auch Biegungen desselben gut ausgeglichen werden. Beispielsweise können drei Platen 6 um jeweils 120° versetzt über dem Umfang des Grundkörpers 5 verteilt sein.

Fig. 2 zeigt eine weitere schematisch dargestellte Variante eines Elektrodenhalters 402, bei der die Mittel zum Variieren eines Querschnitts des Elektrodenhalters 402 und zum Aufbringen eines quer zur Werkzeuglängsachse 2 wirkenden Drucks durch ausschwenkbare Krallen 11 gebildet sind. Zur Bewegung derselben wird ein im Grundkörper 5 gelagerter Motor 9 aktiviert, wodurch die Spindelmutter 10 durch die sich drehende Spindel axial verschoben wird. Mit Hilfe von Hebeln wird diese Bewegung auf die Krallen 11 übertragen, welche dementsprechend ein- oder ausgeschwenkt werden können. Beispielsweise können drei Krallen 11 um jeweils 120° versetzt über dem Umfang des Grundkörpers 5 verteilt sein.

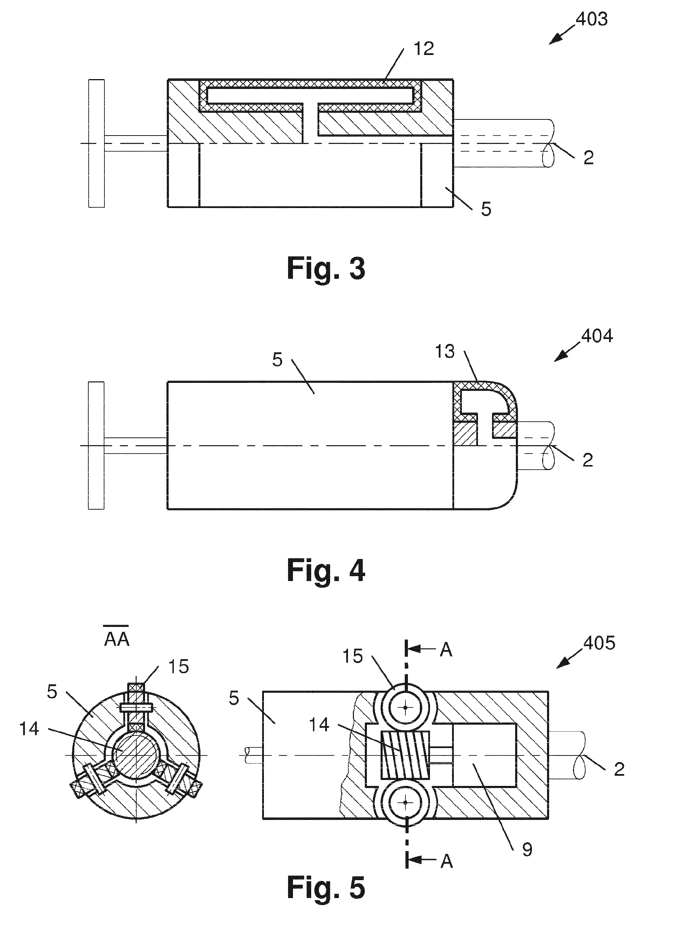

Fig. 3 zeigt eine weitere schematisch dargestellte Variante eines Elektrodenhalters 403, bei der die Mittel zum Variieren eines Querschnitts des Elektrodenhalters 403 und zum Aufbringen eines quer zur Werkzeuglängsachse 2 wirkenden Drucks durch einen pneumatisch oder hydraulisch betätigten Balg/Schwellkörper 12 gebildet sind. Dieser besteht aus einem elastischen Material, sodass er sich nach außen wölbt, wenn der Druck in seinem Inneren erhöht wird. Auf diese Weise kann der Elektrodenhalter 403 in einer Bohrung festgeklemmt werden.

Fig. 4 zeigt eine Variante eines Elektrodenhalters 404, welcher dem Elektrodenhalter 403 sehr ähnlich ist. Im Unterschied dazu ist der Balg/Schwellkörper 13 nun aber im hinteren Bereich des Elektrodenhalters 404 angeordnet. Selbstverständlich könnte der Balg/Schwellkörper 13 auch im vorderen Bereich des Elektrodenhalters 404 angeordnet sein. Dies gilt auch für andere Mittel zum Variieren eines Querschnitts des Elektrodenhalters und zum Aufbringen eines quer zur Werkzeuglängsachse 2 wirkenden Drucks, insbesondere auch für die in Fig. 1 dargestellten Krallen 11, welche auch im mittleren oder vorderen Bereich des Elektrodenhalters 402 angeordnet sein könnten.

Fig. 5 zeigt eine schematisch dargestellte Variante eines Elektrodenhalters 405, welcher Mittel zu seiner Fortbewegung umfasst (links im Querschnitt, rechts im Längsschnitt). Konkret sind diese Mittel im vorliegenden Beispiel durch angetriebene Räder 15 gebildet. Diese weisen eine gummierte Oberfläche auf, in welche eine von einem Motor 9 angetriebenen Spindel 14 eingreift beziehungsweise eingedrückt wird. Dadurch werden bei Drehung der Spindel 14 auch die Räder 15 in Rotation versetzt, wodurch der Elektrodenhalter 405 in der Bohrung vor- und zurück bewegt werden kann. Durch die gummierte Oberfläche dienen die Räder 15 gleichzeitig als Mittel zum Aufbringen eines quer zur Werkzeuglängsachse 2 wirkenden Drucks. Wird der Motor 9 deaktiviert, so wird der Elektrodenhalter 405 in der Bohrung festgesetzt, da sich die Räder 15 wegen der Selbsthemmung der Spindel 14 nicht mehr drehen können. Die Räder 15 erbringen somit einen Mehrfachnutzen.

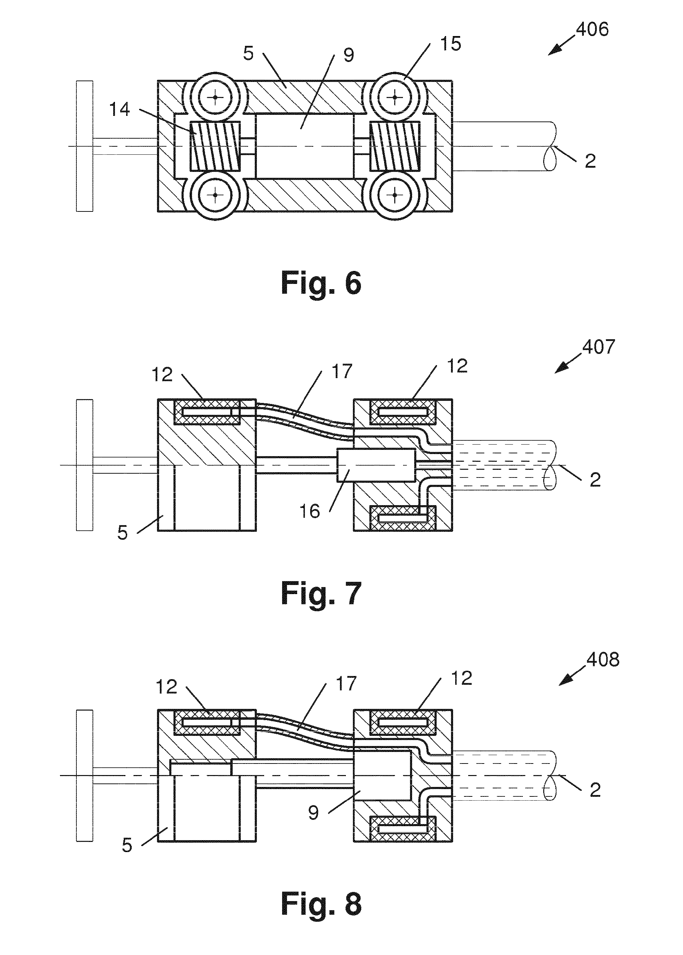

Fig. 6 zeigt eine Variante eines Elektrodenhalters 406, welcher dem Elektrodenhalter 405 sehr ähnlich ist. Im Unterschied dazu umfasst der Elektrodenhalter 406 nun aber Räder 15 an seinem vorderen und hinteren Ende.

Fig. 7 zeigt nun eine schematisch dargestellte Variante eines Elektrodenhalters 407, welcher zwei in der Werkzeuglängsachse 2 gegeneinander bewegbare Segmente umfasst, die jeweils Mittel 12 zum Aufbringen eines quer zur Werkzeuglängsachse 2 wirkenden Drucks beziehungsweise zum Variieren eines Querschnitts des Elektrodenhalters 407 aufweisen. Konkret sind an den beiden Segmenten, welche mit Hilfe eines Hydraulik-/Pneumatikzylinders 16 gegeneinander bewegt werden können, getrennt ansteuerbare Balge/Schwellkörper 12 angeordnet. Zur Klemmung des Elektrodenhalters 407 werden beide Balge/Schwellkörper 12 aktiviert. Zur Fortbewegung desselben, wird einer der beiden Balge/Schwellkörper 12 gelöst und sodann das gelöste Segment mit Hilfe des Hydraulik-/Pneumatikzylinders 16 gegenüber dem weiterhin festgesetzten Segment verschoben. Sodann wird das zuvor gelöste Segment festgesetzt und das andere gelöst und die beiden Segmente wiederum gegeneinander verschoben. Um den Elektrodenhalter 407 in der Fig. 7 beispielsweise von rechts nach links zu bewegen, wird also das linke Segment festgesetzt und das rechte gelöst. Sodann wird der Abstand der beiden verringert, sodass sich das rechte Segment nach links bewegt. In einem weiteren Schritt wird das linke Segment gelöst und das rechte festgesetzt, woraufhin der Abstand der Segmente vergrößert wird und sich auch das linke Segment nach links bewegt. Durch Wiederholung der angegeben Schritte kann der Elektrodenhalter 407 in der Bohrung bewegt werden.

Fig. 8 zeigt eine Variante eines Elektrodenhalters 408, welcher dem Elektrodenhalter 407 sehr ähnlich ist. Anstelle des Hydraulik-/Pneumatikzylinders 16 ist nun aber in einem Segmente ein Elektromotor 9 mit einer Spindel vorgesehen, welche in das andere Segment eingreift. Durch Aktivierung des Elektromotors 9 können die beiden Segmente wiederum gegeneinander verschoben werden. Für die korrekte Funktion ist eine in der Fig. 8 nicht dargestellte Verdrehsicherung zwischen den beiden Segmenten von Vorteil.

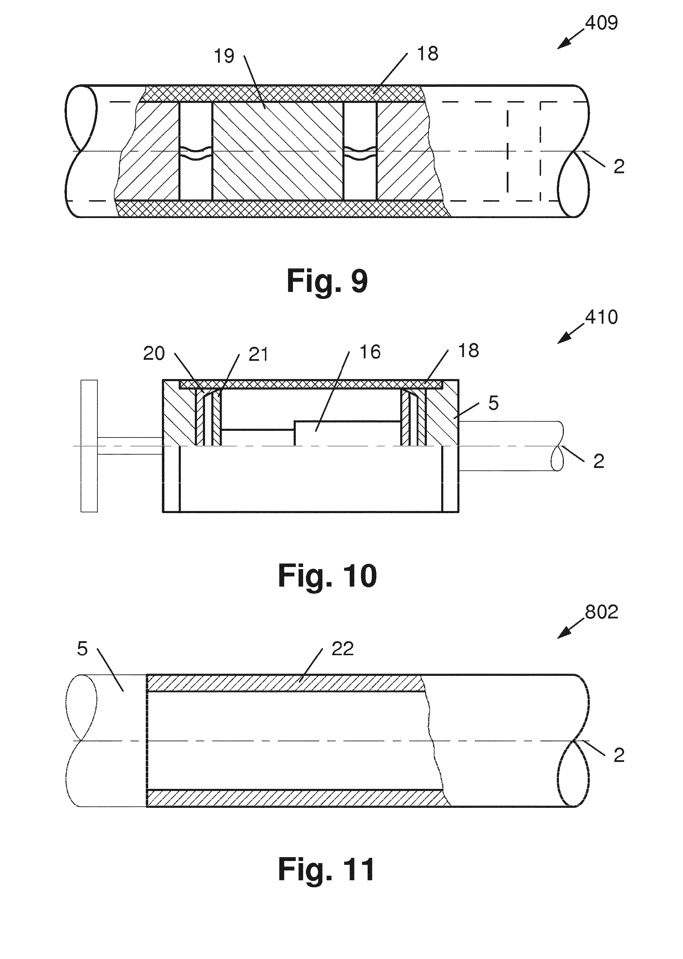

Fig. 9 zeigt eine schematisch dargestellte Variante eines Elektrodenhalters 409, dessen Gehäuse 18 flexibel ist und dessen innerer Aufbau mehrere in sich starre Segmente 19 umfasst, welche zueinander beweglich sind. In diesen Segmenten 19 sind beispielsweise die Mittel 6, 11, 12, 13, 15 zum Aufbringen eines quer zur Werkzeuglängsachse 2 wirkenden Drucks und/oder die Mittel zum Bewegen der Elektrode 301 gegenüber dem Elektrodenhalter 409 und/oder eine Steuerung der genannten Mittel, insbesondere eine elektronische Steuerung, angeordnet. Wie in der Fig. 9 dargestellt ist, können die einzelnen Segmente 19 bedarfsweise durch flexible Leitungen verbunden werden. Auf diese Weise kann sich der Elektrodenhalter 409 besonders gut einem Verlauf der Bohrung anpassen. Dennoch ist die Verwendung von (in der Regel) starren Standardkomponenten für den inneren Aufbau möglich. Beispielsweise umfassen diese Antriebsmotoren sowie Leiterplatten mit darauf angeordneten Steuer- und/oder Kommunikationseinheiten.

Fig. 10 zeigt eine weitere schematisch dargestellte Variante eines Elektrodenhalters 410, dessen Gehäuse 18 ebenfalls flexibel ist. Im Inneren sind zwei Klemmringe 20 mit hakenartigen Fortsätzen sowie zwei Betätigungsringe 21 angeordnet. Durch Betätigen des Hydraulik-/Pneumatikzylinders 16 werden die beiden Betätigungsringe 21 gegen die Klemmringe 20 gedrückt, wodurch die hakenartigen Fortsätze wegen der Abschrägung der beiden Ringe 20, 21 nach außen gepresst werden. Diese Kraftwirkung wird durch das flexible Gehäuse 18 hindurch geleitet, wodurch der Elektrodenhalter 410 in der durch die Elektrode angefertigten Bohrung fixiert werden kann. Selbstverständlich ist der gezeigte Mechanismus mit den beiden Ringen 20 und 21 auch ohne flexibles Gehäuse 18 anwendbar, wenn die hakenartigen Fortsätze beispielsweise durch Öffnungen in einem (starren) Gehäuse hindurch ragen. Umgekehrt sind die in Fig. 1 und 2 vorgestellten Klemmmechanismen auch in Zusammenhang mit einem flexiblen Gehäuse anwendbar.

Fig. 11 zeigt nun eine schematisch dargestellte Variante eines Vorschubkörpers 802, an dessen linkem Ende ein nicht näher dargestellter Grundkörper 5 eines Elektrodenhalters befestigt ist, und welcher im Wesentlichen durch einen elastischen Schlauch 22 gebildet ist. Dieser kann beispielsweise aus flexiblem Kunststoff gefertigt sein. Gleichwertig kann anstelle des Schlauchs 22 aber auch eine flexible Stange eingesetzt werden. Da die Grenzen zum Elektrodenhalter hier fließend sind, insbesondere im Zusammenhang mit der in Fig. 9 dargestellten Variante, ist eine strikte Unterteilung in Vorschubkörper und Elektrodenhalter nicht immer gerechtfertigt. Denkbar ist daher auch, dass diese mehr oder minder eine bauliche Einheit bilden.

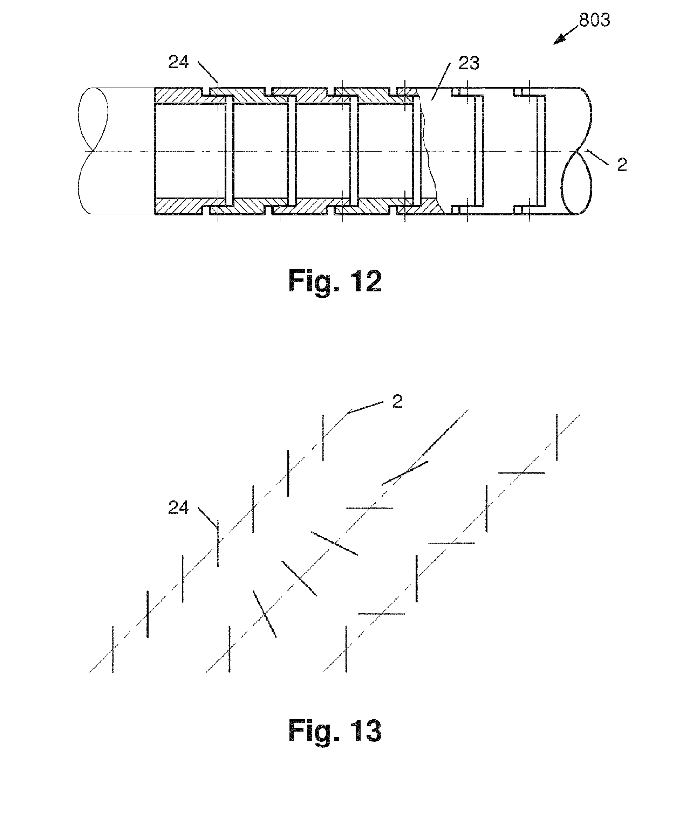

Fig. 12 zeigt eine weitere schematisch dargestellte Variante eines Vorschubkörpers 803, welcher mehrere starre und entlang der Werkzeuglängsachse 2 angeordnete Segmente 23 umfasst, welche untereinander beweglich verbunden sind. Konkret sind die Segmente 23 in diesem Beispiel über quer zur Werkzeuglängsachse 2 ausgerichtete Drehachsen 24 drehbar miteinander verbunden, die normal zur Werkzeuglängsachse 2 und untereinander parallel ausgerichtet sind. Dadurch kann der Vorschubkörper 803 in einer Ebene bewegt werden. Vorteilhaft weist der Vorschubkörper 803 entlang der Werkzeuglängsachse 2 eine konstante Länge auf (Lagerspiel nicht berücksichtigt), sodass eine Verschiebung desselben unmittelbar auf den Elektrodenhalter 400..410 wirkt. Selbstverständlich kann aber auch der Vorschubkörper 802 aus der Fig. 11 so gestaltet sein, dass er entlang der Werkzeuglängsachse 2 eine konstante Länge aufweist.

Fig. 13 zeigt nun verschiedene Möglichkeiten, wie die Drehachsen 24 des Vorschubkörpers 803 ausgerichtet sein können. In der linken Abbildung sind nochmals normal zur Werkzeuglängsachse 2 und untereinander parallel ausgerichtete Drehachsen 24 dargestellt. In der Mitte sind zwei benachbarte Drehachsen 24 um jeweils einen Winkel α verdreht. Dadurch eignet sich ein derart gestalteter Vorschubköper insbesondere für entlang einer Schraubenlinie verlaufende Bohrungen. In der rechten Abbildung ist für den Winkel α=90° gewählt, sodass zwei benachbarte Drehachsen 24 jeweils normal aufeinander stehen. Die Segmente 24 sind dann untereinander kardanisch verbunden, sodass der Vorschubkörper in allgemein räumlich verlaufenden Bohrungen geführt werden kann.

In beiden Vorschubkörpern 802, 803 können zudem mit dem Elektrodenhalter 401..410 verbundene Schleppleitungen angeordnet sein, welche der elektrischen Versorgung der Elektrode 301 und/oder der energetischen Versorgung des Elektrodenhalters 401..410 und/oder der Übermittlung von Steuersignalen an den Elektrodenhalter 401..410 dienen. Insbesondere können die Schleppleitungen durch ein elektrisches Kabel gebildet sein. Selbstverständlich können solche Schleppleitungen auch ohne einen Vorschubkörper 801..803 vorgesehen werden, wenn der Elektrodenhalter 401..410 wie beispielsweise in den Figuren 5 bis 8 dargestellt über einen eigenen Antrieb verfügt.

Schließlich wird an dieser Stelle angemerkt, dass der in Fig. 9 dargestellte Elektrodenhalter 409 analog zum Vorschubkörper 803 aufgebaut sein kann, das heißt dass dessen Gehäuse durch mehrere untereinander beweglich verbundene Segmente gebildet ist. Vorteilhaft ist es dabei, wenn das Gehäuse gleich segmentiert ist wie der innere Aufbau des Elektrodenhalters. In diesem Fall kann das Außengehäuse des Elektrodenhalters also durch die Gehäuse der Segmente 19 gebildet sein. Auch in diesem Fall kann eine strikte Unterteilung in Vorschubkörper und Elektrodenhalter ungerechtfertigt sein.

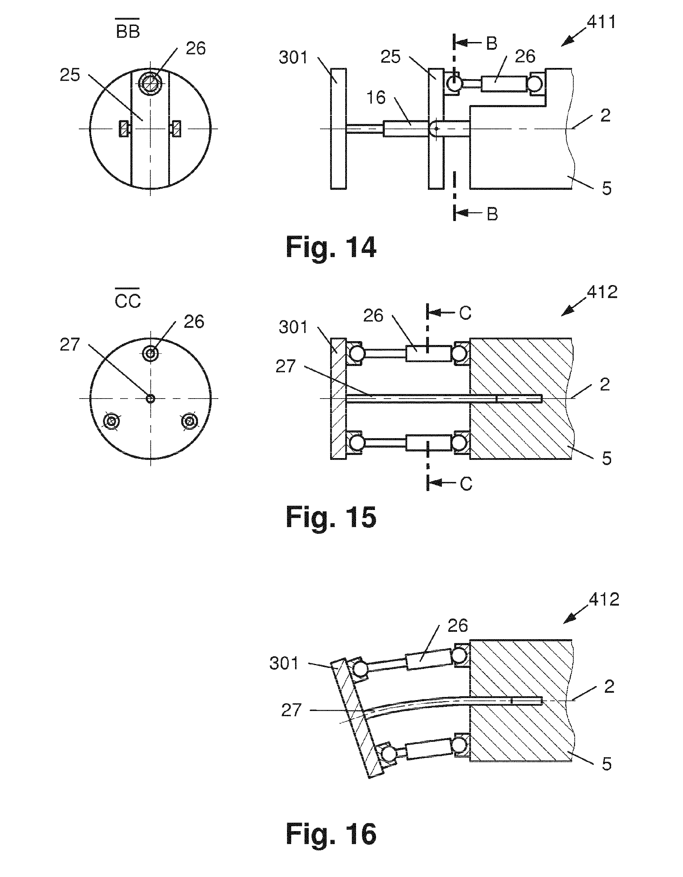

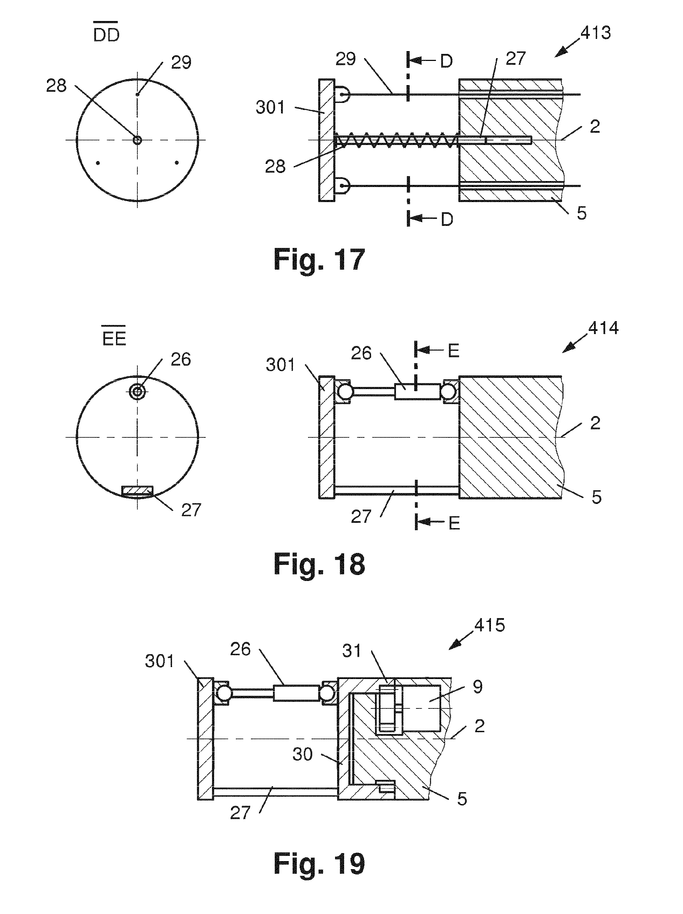

Fig. 14 zeigt eine schematisch dargestellte Variante eines Elektrodenhalters 411, welcher einen seriellkinematischen Bewegungsmechanismus für die Elektrode 301 aufweist. Konkret umfasst dieser Bewegungsmechanismus eine drehbar gelagerte Platte 25, welche durch einen Hydraulik-/Pneumatikzylinder 26 ausgelenkt werden kann, sowie einen Hydraulik-/Pneumatikzylinder 16 zur Verschiebung der Elektrode 301 in der Werkzeuglängsachse 2. Zu den Hydraulik-/Pneumatikzylindern 16 und 26 ist zu bemerken, dass der Hydraulik-/Pneumatikzylinder 26 gelenkig gelagert ist und somit keine Führungsfunktion übernehmen kann. Der Hydraulik-/Pneumatikzylindern 16 kann dagegen eine solche Führungsfunktion übernehmen, da er mit der Elektrode 301 und der drehbar gelagerten Platte 25 starr verbunden ist. Somit kann die Elektrode 301 in der Werkzeuglängsachse 2 verfahren und aus dieser ausgeschwenkt und somit quer zur Werkzeuglängsachse 2 bewegt sowie um eine quer zur Werkzeuglängsachse 2 ausgerichtete Drehachse gedreht werden. Auf diese Weise können in einer Ebene verlaufende Bohrungen hergestellt werden. Zur Herstellung von räumlich verlaufenden Bohrungen muss dementsprechend der Vorschubkörper 5 verdreht oder der gezeigte Mechanismus beispielsweise mit dem in Fig. 19 dargestellten Mechanismus kombiniert werden.

Fig. 15 zeigt eine weitere schematisch dargestellte Variante eines Elektrodenhalters 412, welcher einen parallelkinematischen Bewegungsmechanismus für die Elektrode 301 aufweist. Dabei ist die Elektrode 301 über drei gelenkig gelagerte Hydraulik-/Pneumatikzylindern 26 mit dem Grundkörper 5 verbunden. Zusätzlich ist die Elektrode 301 auch über eine Führungsstange 27 geführt. Diese ist nicht starr, sondern weist eine gewisse Flexibilität auf, sodass die Elektrode wie in Fig. 16 dargestellt ausgelenkt werden kann. Besonders vorteilhaft ist an dieser Variante, dass sich durch die biegsame Führungsstange 27 automatisch eine Ablenkung der Werkzeuglängsachse 2 in eine Kreisbahn ergibt. Durch entsprechende Ansteuerung der Hydraulik-/Pneumatikzylinder 26 kann die Elektrode 301 somit entlang beliebiger Kreisbahnen und natürlich auch gerade verfahren werden. Wegen des parallelkinematischen Antriebs kann die Elektrode 301 darüber hinaus in jede beliebige Richtung abgelenkt werden, auch ohne dass dazu der Grundkörper 5 gedreht werden müsste, oder ein Drehmechanismus wie in Fig. 19 dargestellt nötig wäre.

Fig. 17 zeigt eine Variante eines Elektrodenhalters 413, welcher dem Elektrodenhalter 412 sehr ähnlich ist. Anstelle der Hydraulik-/Pneumatikzylinders 26 wird die Elektrode 301 nun aber über Seilzüge 29 gesteuert. Um eine Längsverschiebung und Ablenkung der Elektrode 301 zu ermöglichen ist die flexible Führungsstange 27 mit einer Druckfeder 28 umgeben, welche eine Vorspannung zwischen Elektrode 301 und Grundkörper 5 bewirkt.

Fig. 18 zeigt eine weitere schematisch dargestellte Variante eines Elektrodenhalters 414, welcher einen Hydraulik-/Pneumatikzylinder 26 für die Bewegung der Elektrode 301 aufweist. In diesem Beispiel ist die Elektrode lediglich in einer Ebene aus der Werkzeuglängsachse 2 ausschwenkbar, da die Führungsstange 27 keine Längsverschiebung zulässt. Eine solche kann bei dieser Variante beispielsweise über einen Vorschubkörper 801..803 bewirkt werden. Vorteilhaft ist auch hier die Auslenkung der Elektrode 301 entlang einer Kreisbahn.

Fig. 19 zeigt eine Variante eines Elektrodenhalters 415, welcher dem Elektrodenhalter 414 sehr ähnlich ist. In diesem Beispiel ist der Hydraulik-/Pneumatikzylinder 26 jedoch nicht fix mit dem Grundkörper 5 verbunden, sondern mit einer Hülse 30, welche über ein von einem Motor 9 angetriebenes Ritzel 31 um die Werkzeuglängsachse 2 gedreht werden kann. Auf diese Weise wird wiederum ein seriellkinematischer Bewegungsmechanismus realisiert, welche eine Auslenkung der Elektrode 301 in eine beliebige Richtung zulässt.

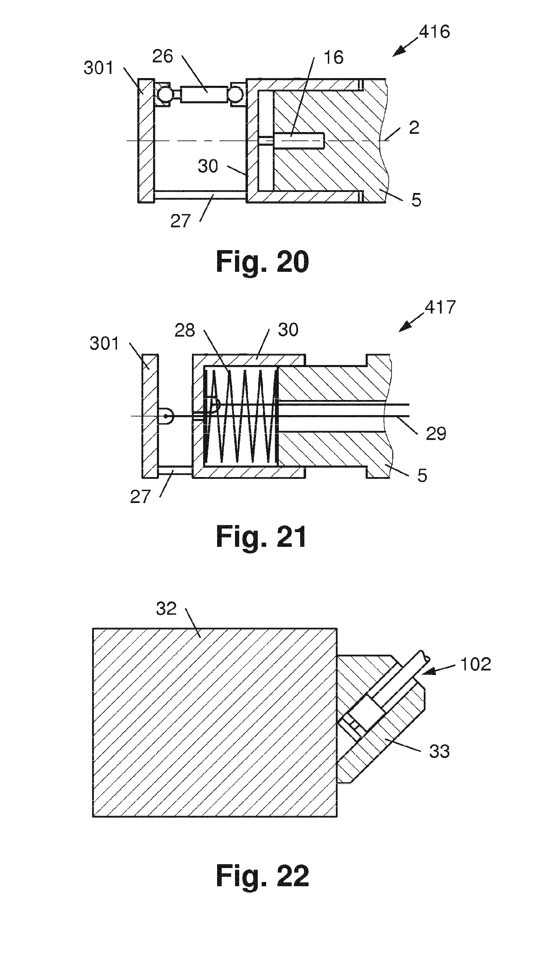

Fig. 20 zeigt eine weitere Variante eines Elektrodenhalters 416, welcher dem Elektrodenhalter 414 sehr ähnlich ist. In diesem Beispiel ist der Hydraulik-/Pneumatikzylinder 26 jedoch ebenfalls nicht fix mit dem Grundkörper 5 verbunden, sondern mit einer Hülse 30, welche über einen Hydraulik-/Pneumatikzylinder 16 entlang der Werkzeuglängsachse 2 verschoben werden kann. Auf diese Weise kann ein Längsvorschub der Elektrode 301 bewirkt werden, ohne dass dazu der Grundkörper 5 respektive ein Vorschubkörper 801..803 bewegt werden müsste. Eine besonders vorteilhafte Variante eines Elektrodenhalters resultiert, wenn die in der Fig. 19 offenbarte Lehre mit der in der Fig. 20 offenbarten Lehre kombiniert wird. Dadurch ist es möglich, die Elektrode 301 entlang beliebiger Kreisbahnen und natürlich auch gerade zu verfahren.

Fig. 21 zeigt eine Variante eines Elektrodenhalters 417, welcher dem Elektrodenhalter 416 sehr ähnlich ist. Anstelle der Hydraulik-/Pneumatikzylinder 16 und 26 sind in diesem Beispiel aber Seilzüge 29 vorgesehen, um die Elektrode 301 zu bewegen.

Generell kann die in den unterschiedlichen Figuren offenbare Lehre beliebig kombiniert werden. Beispielsweise ist es ohne weiteres denkbar, die in Fig. 2 offenbarten Krallen 11 mit einer Anordnung nach Fig. 15 zu kombinieren. Denkbar wäre etwa auch, die Fig. 1 mit dem Antrieb aus der Fig. 5 zu erweitern usw. Die dargestellten Ausführungsvarianten sind daher als nicht abschließende und lediglich illustrative Auflistung von Möglichkeiten zu verstehen, die sowohl einzeln anwendbar sind als auch untereinander baukastenartig beziehungsweise modular kombiniert werden können.

Insbesondere wird an dieser Stelle auch angemerkt, dass die dargestellten Aktuatoren lediglich zur Veranschaulichung des Funktionsprinzips des Funkenerosions-Werkzeugs dienen und untereinander beliebig austauschbar sind. Beispielsweise können die Mittel 9, 16, 26, 29 zum Bewegen der Elektrode 301 gegenüber dem Elektrodenhalter 401..417 durch wenigstens einen mit der Elektrode 301 verbunden Aktuator aus der Gruppe: pneumatischer Aktuator, hydraulischer Aktuator, Piezo-Aktuator, elektromechanischer Aktuator - jeweils als Linear- oder Rotationsmotor ausgeführt - gebildet sein. Anstelle eines Spindelantriebs kann in den obigen Darstellungen daher beispielsweise auch ein pneumatischer oder hydraulischer Aktuator eingesetzt werden und umgekehrt. Generell können Aktuatoren beliebiger Bauart eingesetzt werden, um eine Bewegung des Funkenerosions-Werkzeugs zu ermöglichen.

Selbstverständlich können auch alle Mittel zum Variieren eines Querschnitts des Elektrodenhalters und zum Aufbringen eines quer zur Werkzeuglängsachse 2 wirkenden Drucks auf beliebige Art angesteuert werden, insbesondere elektrisch, hydraulisch, pneumatisch oder mechanisch (z.B. mit Hilfe von Seilzügen). Beispielsweise könnten die in Fig. 1 dargestellten und elektrisch angetriebenen Krallen 11 auch durch einen pneumatischen oder hydraulischen Linearmotor bewegt werden. Insbesondere ist auch denkbar, dass die Krallen 11 mit Hilfe von Seilzügen betätigt werden, die hinter dem Funkenerosions-Werkzeug durch das bereits hergestellte Loch nach außen geführt werden. Analog dazu könnte beispielsweise auch die in Fig. 10 dargestellte Klemmung über Seilzüge oder auch einen elektrischen Antrieb erfolgen. Die erwähnten Beispiele sind natürlich nur illustrativ. Selbstverständlich können auch andere Varianten des Funkenerosions-Werkzeugs mit von der jeweiligen Darstellung abweichenden Antrieben ausgerüstet werden.

Die Figuren 22 bis 26 veranschaulichen nun ein vorteilhaftes Verfahren zur Herstellung eines funkenerodierten Lochs mit Hilfe eines erfindungsgemäßen Funkenerosions-Werkzeugs.

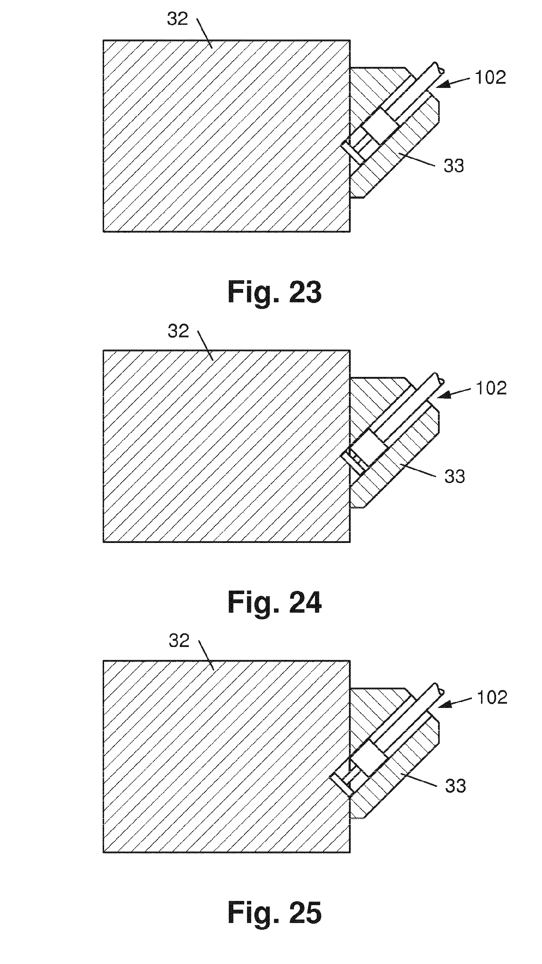

In Fig. 22 wird ein Hilfskörper 33 mit einer sich in der Werkzeuglängsachse 2 erstreckenden Öffnung, welche einem im Wesentlichen der Elektrode 301 entsprechenden Querschnitt aufweist, im Bereich des herzustellenden Lochs auf dem Werkstück 32 fixiert. Danach wird der Elektrodenhalter 401..417 in der genannten Öffnung mit zum Werkstück 32 weisender Elektrode 301 positioniert und in einem Schritt a) durch Aufbringen eines quer zur Werkzeuglängsachse 2 wirkenden Drucks im Hilfskörper 33 fixiert. In einem weiteren Schritt b) wird die Erosionsspannung eingeschaltet und die Elektrode 301 in einem weiteren Schritt c) auf die Bearbeitungsfront zu bewegt. Fig. 23 zeigt die Elektrode 301, welche gegenüber dem Elektrodenhalter 401..417 ausgefahren wurde. In einem weiteren Schritt d) wird die Erosionsspannung abgeschaltet, und in einem darauf hin folgenden Schritt e) wird die die Elektrode 301 gegenüber dem Elektrodenhalter 401..417 von der Bearbeitungsfront weg bewegt. In einem weiteren Schritt f) wird der Elektrodenhalter 401..417 durch Senken des quer zur Werkzeuglängsachse 2 wirkenden Drucks gelöst und in einem Schritt g) in Richtung der Bearbeitungsfront bewegt. Dieser Zustand ist in Fig. 24 dargestellt. Sodann werden die Schritte a) bis g) so lange wiederholt, bis die Bohrung fertiggestellt ist. Fig. 25 zeigt dazu einen Zustand, nachdem die Elektrode 301 gegenüber dem in Fig. 24 dargestellten Zustand bei fixiertem Elektrodenhalter 401..417 weiter in das Werkstück 32 eingedrungen ist. Fig. 26 zeigt schließlich einen Zustand, in dem das Funkenerosions-Werkzeug schon relativ weit in das Werkstück 32 vorgedrungen ist. Im Anschluss an das Funkenerodieren kann die hergestellte Bearbeitungskontur in einem weiteren Bearbeitungsschritt durch beliebige spanende oder nicht spanende Bearbeitungsverfahren weiterbearbeitet bzw. veredelt werden, um die Oberfläche der Bohrung zu verbessern und insbesondere auch um die bei der Funkenerosion entstandenen Mikrorisse zu beseitigen. Abschließend wird angemerkt, dass die Verwendung eines Hilfskörpers 33 nur eine optionale vorteilhafte Maßnahme darstellt, aber nicht zwingend für das angegebene Verfahren ist. Selbstverständlich kann das Funkenerosions-Werkzeug auch auf andere Weise geführt werden.

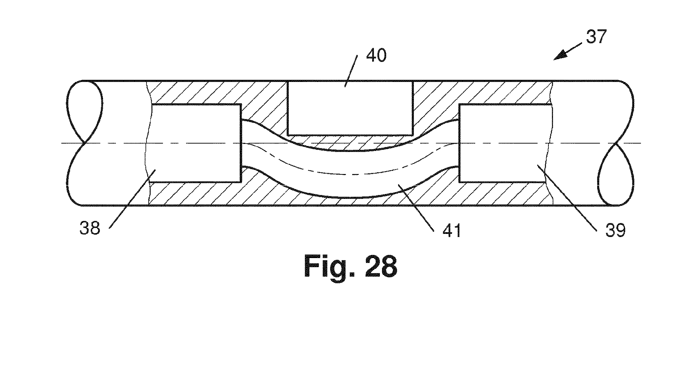

Fig. 28 zeigt nun eine vorteilhafte Ausgestaltung einer Elektrode 302 für ein Funkenerosions-Werkzeug, insbesondere für ein erfindungsgemäßes Funkenerosions-Werkzeug 101, 102 oder als Bestandteil desselben in der Vorderansicht (links) und im Schnitt (rechts). Die Elektrode 302 umfasst einen Grundkörper 34mit einem einer Bearbeitungsfront zugewandten Abschnitt, welcher eine Zylinderoberfläche oder eine Kugeloberfläche aufweist. Die Bearbeitungsfront ist in der Fig. 27 in der Vorderansicht zur Gänze zu sehen, im Schnitt bildet jener Ring im Grundkörper 34, welcher den größten Durchmesser aufweist, die Grenze zur Bearbeitungsfront. Diese ist im Schnitt rechts gelegen. Weiterhin umfasst die Elektrode 302 wenigstens eine in dem zylindrischen oder kugelförmigen Abschnitt angeordnete Nut 35, welche von einem Mittelbereich des Abschnitts zum Rand desselben verläuft, und wenigstens eine Bohrung 36, welche eine der Bearbeitungsfront abgewandte Seite der Elektrode 302 mit der wenigstens einen Nut 35 verbindet. Auf der linken Seite weist die Elektrode 302 einen Sitz auf, um sie wie in den vorgehenden Figuren dargestellt mit dem Elektrodenhalter 401..417 verbinden zu können.

Im konkreten Beispiel umfasst der zylindrische oder kugelförmige Abschnitt der Elektrode 302 in seinem Randbereich eine wenigstens bis zur Grenze der Bearbeitungsfront reichende Abrundung, welche einen Radius r aufweist, der kleiner ist als der der Radius R des zylindrischen oder kugelförmigen Abschnitts. Auf diese Weise können unschöne Kanten in der Bohrung, welche beim Schwenken einer kantigen Elektrode 301 entstehen können, vermieden werden.

Im gezeigten Beispiel ist der Radius R des zylindrischen oder kugelförmigen Abschnitts darüber hinaus kleiner gleich dem Abstand zwischen der Drehachse der Elektrode 302 und der Oberfläche des zylindrischen oder kugelförmigen Abschnitts ist. Damit kann die Elektrode 302 besonders gut mit einem Funkenerosions-Werkzeug eingesetzt werden, bei dem die Elektrode 302 um eine quer zu einer Werkzeuglängsachse des Funkenerosions-Werkzeugs ausgerichtete Drehachse gedreht werden kann, somit für alle in den Figuren 14 bis 21 dargestellten Funkenerosions-Werkzeuge. Bei diesen gleitet die Elektrode 302 beim Schwenken entlang einer bereits im Werkstück hergestellten Öffnung, das heißt entlang ihrer Bearbeitungsfront. Ist die Elektrode 302 gegenüber dem Drehpunkt entlang der Werkzeuglängsachse 2 verschiebbar, so ist der Radius R des zylindrischen oder kugelförmigen Abschnitts vorzugsweise kleiner gleich dem kleinsten Abstand zwischen der Drehachse der Elektrode 302 und der Oberfläche des zylindrischen oder kugelförmigen Abschnitts.

Generell kann eine Elektrode 302 mit einem kugelförmigen Abschnitt universell eingesetzt werden, da diese um jede beliebige Achse geschwenkt werden kann. Vorzugsweise wird eine Elektrode 302 mit einem zylinderförmigen Abschnitt eingesetzt, wenn diese nur um eine Drehachse geschwenkt werden kann (siehe beispielsweise Fig. 14, 18, 20 und 21), wobei die genannte Drehachse und die Achse des Zylinders parallel ausgerichtet oder identisch sind.

Die Figur 28 zeigt nun ein vorteilhaftes Verfahren zur Herstellung einer Ausweichbohrung in einem Bohrstrangteil, welche zwei Spülbohrungen verbindet, vorzugsweise unter Verwendung eines Funkenerosions-Werkzeugs 101, 102 der oben erläuterten Art.

Konkret zeigt Fig. 28 ein Bohrstrangteil 37 mit zwei geraden, in einer Achse verlaufenden Spülbohrungen 38 und 39, die in als Sacklöcher ausgeführt sind. Weiterhin umfasst das Bohrstrangteil 37 eine Ausnehmung 40. Die beiden Spülbohrungen 38 und 39 werden mit einer bogenförmig verlaufenden, durch Funkenerosion hergestellten Ausweichbohrung 41 verbunden. Durch die bogenförmig verlaufende Ausweichbohrung 41 weist der Bohrstrangteil 37 gute mechanische und hydraulische Eigenschaften auf (für eine im Inneren des Bohrstrangteils 37 fließende Flüssigkeit).

Besonders gut lässt sich eine solche Ausweichbohrung 41 mit einem Funkenerosions-Werkzeug 101, 102 der erfindungsgemäßen Art herstellen. Ein Bohrstrangteil 37 ist ja üblicherweise einige Meter lang, und die Spülbohrungen 38 und 39 ragen dementsprechend weit in das Bohrstrangteil 37 hinein. Durch einen Elektrodenhalter 401..417 ist es nun aber möglich, das Funkenerosions-Werkzeug 101, 102 auch tief im Inneren eines Bohrstrangteils 37 sicher zu fixieren und die Elektrode 301, 302 in einem engen Toleranzbereich zu bewegen.

In der Figur 28 sind Spülbohrungen 38 und 39 gleichen Durchmessers und in derselben Achse verlaufend dargestellt. Dies ist jedoch keineswegs zwingend für die Herstellung einer Ausweichbohrung 41. Selbstverständlich können die Spülbohrungen 38 und 39 auch unterschiedlichen Durchmesser haben und in unterschiedlichen Achsen verlaufen. Insbesondere ist auch denkbar, dass eine Spülbohrung 38, 39 abgesetzt ist und damit von einem größeren auf einen kleineren Durchmesser übergeht oder umgekehrt. Weiterhin ist im Speziellen auch denkbar, dass eine Spülbohrungen 38, 39 in einen kleineren, achsversetzten Teil übergeht. Diese achsversetzten Teile können sich dabei insbesondere auf demselben Teilkreis befinden und winkelversetzt sein. Schließlich ist auch vorstellbar, dass die Ausweichbohrung 41 abweichend von dem in der Figur 28 dargestellten Fall denselben Durchmesser aufweist wie die Spülbohrungen 38 und 39.

Abschließend wird angemerkt, dass die Ausführungsbeispiele mögliche Ausführungsvarianten und Anwendungsmöglichkeiten eines erfindungsgemäßen Funkenerosions-Werkzeugs zeigen, wobei an dieser Stelle bemerkt sei, dass die Erfindung nicht auf die speziell dargestellten Ausführungs- und Anwendungsvarianten desselben eingeschränkt ist, sondern vielmehr auch diverse Kombinationen der einzelnen Varianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Varianten, die durch Kombinationen einzelner Details der dargestellten und beschriebenen Variante möglich sind, vom Schutzumfang mit umfasst. Insbesondere wird festgehalten, dass ein Funkenerosions-Werkzeugs in der Realität auch mehr Bestandteile als dargestellt umfassen kann.

Der Ordnung halber sei abschließend darauf hingewiesen, dass zum besseren Verständnis des Aufbaus des Funkenerosions-Werkzeugs dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | | | |
|---|---|---|---|
| 101, 102 | Funkenerosions-Werkzeug | 36 | Bohrung |
| 2 | Werkzeuglängsachse | 37 | Bohrstrangteil |
| 301, 302 | Elektrode | 38 | erste Spülbohrung |
| 401..417 | Elektrodenhalter | 39 | zweite Spülbohrung |
| 5 | Grundkörper | 40 | Ausnehmung |
| | | | |
| 6 | Platte | 41 | bogenförmige Ausweichbohrung |
| 7 | gedachter Schlauch | | |
| 801..803 | Vorschubkörper | | |
| 9 | Elektromotor | | |
| 10 | Spindelmutter | | |
| | | | |
| 11 | Kralle | | |
| 12 | Balg/Schwellkörper | | |
| 13 | Balg/Schwellkörper | | |
| 14 | Spindel | | |
| 15 | Rad | | |
| | | | |
| 16 | Hydraulik-/Pneumatikzylinder (starr gelagert) | | |
| 17 | flexible Leitung | | |
| 18 | flexibles Gehäuse | | |
| 19 | Segment (Elektrodenhalter) | | |
| 20 | Klemmring | | |
| | | | |
| 21 | Spannring | | |
| 22 | flexibler Schlauch | | |
| 23 | Segment (Vorschubkörper) | | |
| 24 | Drehachse | | |
| 25 | drehbar gelagerte Platte | | |
| | | | |
| 26 | Hydraulik-/Pneumatikzylinder (gelenkig gelagert) | | |
| 27 | Führungsstange | | |
| 28 | Druckfeder | | |
| 29 | Seilzug | | |
| 30 | Hülse | | |
| | | | |
| 31 | Ritzel | | |
| 32 | Werkstück | | |
| 33 | Hilfskörper | | |
| 34 | Grundkörper | | |
| 35 | Nut | | |

## Patentansprüche

1. Funkenerosions-Werkzeug (101, 102), umfassend eine auf einer Werkzeuglängsachse (2) angeordnete Elektrode (301, 302) und einen entlang der Werkzeuglängsachse (2) ausgerichteten und auf dieser angeordneten sowie mit der Elektrode (301, 302) verbundenen Elektrodenhalter (401..417), welcher Mittel zum Bewegen der Elektrode (301, 302) gegenüber dem Elektrodenhalter (401..417) umfasst,
**dadurch gekennzeichnet,**
**dass** der Elektrodenhalter (401..417) Mittel (6, 11, 12, 13, 15) zum Aufbringen eines quer zur Werkzeuglängsachse (2) wirkenden Drucks im Bereich eines gedachten, sich in der Werkzeuglängsachse (2) erstreckenden Schlauches (7) mit einem im Wesentlichen der Elektrode (301, 302) entsprechenden Querschnitt umfasst.

2. Funkenerosions-Werkzeug (101, 102) nach Anspruch 1, **gekennzeichnet durch** Mittel zum Variieren (6, 11, 12, 13) eines Querschnitts des Elektrodenhalters (401..417) quer zur Werkzeuglängsachse (2).

3. Funkenerosions-Werkzeug (101, 102) nach Anspruch 2, **dadurch gekennzeichnet, dass** die Mittel zum Variieren eines Querschnitts des Elektrodenhalters (401..417) und zum Aufbringen eines quer zur Werkzeuglängsachse (2) wirkenden Drucks durch ausfahrbare und/oder ausschwenkbare Klemmelemente/Krallen (6, 11) gebildet sind.

4. Funkenerosions-Werkzeug (101, 102) nach Anspruch 3, **dadurch gekennzeichnet dass** ein Gehäuse des Elektrodenhalters (401..417) elastisch ist und die Klemmelemente/Krallen (6, 11) durch dieses Gehäuse hindurch wirken.

5. Funkenerosions-Werkzeug (101, 102) nach einem der Ansprüche 2 bis 4, **dadurch gekennzeichnet, dass** die Mittel zum Variieren eines Querschnitts des Elektrodenhalters (401..417) und zum Aufbringen eines quer zur Werkzeuglängsachse (2) wirkenden Drucks durch einen pneumatisch oder hydraulisch betätigten Balg/Schwellkörper (12, 13) gebildet sind.

6. Funkenerosions-Werkzeug (101, 102) nach einem der Ansprüche 1 bis 5, **dadurch gekennzeichnet dass** der Elektrodenhalter (401..417) Mittel zu seiner Fortbewegung umfasst.

7. Funkenerosions-Werkzeug (101, 102) nach Anspruch 6, **dadurch gekennzeichnet dass** die Fortbewegungsmittel durch angetriebene Räder (15) gebildet sind.

8. Funkenerosions-Werkzeug (101, 102) nach Anspruch 6 oder 7, **dadurch gekennzeichnet, dass** der Elektrodenhalter (401..417) zumindest zwei, in der Werkzeuglängsachse (2) gegeneinander bewegbare Segmente umfasst, die jeweils Mittel (12) zum Aufbringen eines quer zur Werkzeuglängsachse (2) wirkenden Drucks beziehungsweise zum Variieren eines Querschnitts des Elektrodenhalters (401..417) aufweisen.

9. Funkenerosions-Werkzeug (101, 102) nach einem der Ansprüche 1 bis 8, **gekennzeichnet durch** einen entlang der Werkzeuglängsachse (2) ausgerichteten biegsamen, stangenförmigen oder rohrförmigen Vorschubkörper (801..803), welcher mit dem Elektrodenhalter (401..417) verbunden ist.

10. Funkenerosions-Werkzeug (101, 102) nach Anspruch 9, **dadurch gekennzeichnet, dass** der Vorschubkörper (803) mehrere starre und entlang der Werkzeuglängsachse (2) angeordnete Segmente (23) umfasst, welche untereinander beweglich verbunden sind.

11. Funkenerosions-Werkzeug (101, 102) nach Anspruch 10, **dadurch gekennzeichnet, dass** die Segmente (23) über quer zur Werkzeuglängsachse (2) ausgerichtete Drehachsen (24) drehbar miteinander verbunden sind, wobei
- alle Drehachsen (24) normal zur Werkzeuglängsachse (2) und untereinander parallel ausgerichtet sind oder
- alle Drehachsen (24) normal zur Werkzeuglängsachse (2) ausgerichtet sind und zwei benachbarte Drehachsen (24) um jeweils einen Winkel α verdreht sind.

12. Funkenerosions-Werkzeug (101, 102) nach einem der Ansprüche 9 bis 11, **dadurch gekennzeichnet, dass** der Vorschubkörper (801..802) entlang der Werkzeuglängsachse (2) eine konstante Länge aufweist.

13. Funkenerosions-Werkzeug (101, 102) nach einem der vorgehenden Ansprüche, **dadurch gekennzeichnet, dass** die Elektrode (301, 302) gegenüber dem Elektrodenhalter (401..417) in der Werkzeuglängsachse (2) und/oder quer dazu bewegbar ist.

14. Funkenerosions-Werkzeug (101, 102) nach einem der vorgehenden Ansprüche, **dadurch gekennzeichnet, dass** die Elektrode (301, 302) gegenüber dem Elektrodenhalter (401..417) drehbar ist, wobei die Drehachse quer zur Werkzeuglängsachse (2) ausgerichtet ist.

15. Funkenerosions-Werkzeug (101, 102) nach einem der vorgehenden Ansprüche, **dadurch gekennzeichnet, dass** die Elektrode (301, 302) gegenüber dem Elektrodenhalter (401..417) drehbar ist, wobei die Drehachse parallel zur Werkzeuglängsachse (2) ausgerichtet ist oder mit dieser zusammenfällt.

16. Funkenerosions-Werkzeug (101, 102) nach einem der Ansprüche 1 bis 15, **dadurch gekennzeichnet, dass** die Mittel (9, 16, 26, 29) zum Bewegen der Elektrode (301, 302) gegenüber dem Elektrodenhalter (401..417) durch wenigstens einen mit der Elektrode (301, 302) verbunden Aktuator aus der Gruppe: pneumatischer Aktuator, hydraulischer Aktuator, Piezo-Aktuator, elektromechanischer Aktuator - jeweils als Linear- oder Rotationsmotor ausgeführt - gebildet sind.

17. Funkenerosions-Werkzeug (101, 102) nach einem der Ansprüche 1 bis 16, **dadurch gekennzeichnet, dass** die Mittel zum Bewegen der Elektrode (301, 302) gegenüber dem Elektrodenhalter (401..417) durch Seilzüge (29) gebildet sind, welcher mit der Elektrode (301, 302) verbunden sind.

18. 1Funkenerosions-Werkzeug (101, 102) nach einem der vorgehenden Ansprüche, **gekennzeichnet durch** im Bereich der Werkzeuglängsachse (2) angeordnete und mit dem Elektrodenhalter (401..417) verbundene Schleppleitungen, welches der elektrischen Versorgung der Elektrode (301, 302) und/oder der energetischen Versorgung des Elektrodenhalters (401..417) und/oder der Übermittlung von Steuersignalen an den Elektrodenhalter (401..417) dienen.

19. Funkenerosions-Werkzeug (101, 102) nach einem der vorgehenden Ansprüche, **dadurch gekennzeichnet dass** ein Gehäuse des Elektrodenhalters (401..417) flexibel ist und ein innerer Aufbau desselben mehrere in sich starre Segmente umfasst, welche zueinander beweglich sind und in welchen die Mittel (6, 11, 12, 13, 15) zum Aufbringen eines quer zur Werkzeuglängsachse (2) wirkenden Drucks und/oder die Mittel (9, 16, 26, 29) zum Bewegen der Elektrode (301, 302) gegenüber dem Elektrodenhalter (401..417) und/oder eine Steuerung der genannten Mittel (6, 9, 11,12, 13, 15, 16, 26, 29) angeordnet sind.

20. Elektrode (302) für ein Funkenerosions-Werkzeug, insbesondere für ein Funkenerosions-Werkzeug (101, 102) nach einem der Ansprüche 1 bis 19 oder als Bestandteil desselben,
**gekennzeichnet durch**
- einen einer Bearbeitungsfront zugewandten Abschnitt mit einer Zylinderoberfläche oder einer Kugeloberfläche,
- wenigstens eine in diesem Abschnitt angeordnete Nut (35), welche von einem Mittelbereich des Abschnitts zum Rand desselben verläuft und
- wenigstens eine Bohrung (36), welche eine der Bearbeitungsfront abgewandte Seite der Elektrode (302) mit der wenigstens einen Nut (35) verbindet.

21. Elektrode (302) nach Anspruch 20, **dadurch gekennzeichnet, dass** der zylindrische oder kugelförmige Abschnitt in seinem Randbereich eine wenigstens bis zur Grenze der Bearbeitungsfront reichende Abrundung umfasst, welche einen Radius (r) aufweist, der kleiner ist als der der Radius (R) des zylindrischen oder kugelförmigen Abschnitts.

22. Funkenerosions-Werkzeug mit einer drehbaren Elektrode (302) nach Anspruch 20 oder 21, wobei die Drehachse quer zu einer Werkzeuglängsachse des Funkenerosions-Werkzeugs ausgerichtet ist,
**dadurch gekennzeichnet,**
**dass** der Radius (R) des zylindrischen oder kugelförmigen Abschnitts kleiner gleich dem Abstand zwischen der Drehachse der Elektrode (302) und der Oberfläche des zylindrischen oder kugelförmigen Abschnitts ist.

23. Funkenerosions-Werkzeug (101, 102), **gekennzeichnet durch** die Merkmale der Ansprüche 14 und 22.

24. Verfahren zur Herstellung eines funkenerodierten Lochs mit Hilfe einer auf einer Werkzeuglängsachse (2) angeordnete Elektrode (301, 302) sowie einem entlang der Werkzeuglängsachse (2) ausgerichteten und auf dieser angeordneten sowie mit der Elektrode (301, 302) verbundenen Elektrodenhalter (401..417), **gekennzeichnet durch** die Schritte:
a) Fixieren des Elektrodenhalters (401..417) **durch** Aufbringen eines quer zur Werkzeuglängsachse (2) wirkenden Drucks in einer sich in der Werkzeuglängsachse (2) erstreckenden Öffnung, welche einem im Wesentlichen der Elektrode (301, 302) entsprechenden Querschnitt aufweist,
b) Einschalten der Erosionsspannung
c) Bewegen der Elektrode (301, 302) gegenüber dem Elektrodenhalter (401..417) auf eine Bearbeitungsfront zu,
d) Abschalten der Erosionsspannung
e) Bewegen der Elektrode (301, 302) gegenüber dem Elektrodenhalter (401..417) von der Bearbeitungsfront weg,
f) Lösen des Elektrodenhalters (401..417) **durch** Senken des genannten, quer zur Werkzeuglängsachse (2) wirkenden Drucks,
g) Bewegen des Elektrodenhalters (401..417) in Richtung der Bearbeitungsfront und wiederholen der Schritte a) bis g)

25. Verfahren nach Anspruch 24, **dadurch gekennzeichnet, dass** vor Schritt a) ein Hilfskörper (33) mit einer sich in der Werkzeuglängsachse (2) erstreckenden Öffnung, welche einem im Wesentlichen der Elektrode (301, 302) entsprechenden Querschnitt aufweist, im Bereich des herzustellenden Lochs fixiert und der Elektrodenhalter (401..417) in der genannten Öffnung mit zum Werkstück (32) weisender Elektrode (301, 302) positioniert wird.

26. Verfahren nach Anspruch 24 oder 25, **dadurch gekennzeichnet, dass** die genannte Öffnung, in welcher der Elektrodenhalter (401..417) fixiert wird, durch die Elektrode (301, 302) hergestellt wurde.

27. Verfahren nach einem der Ansprüche 24 bis 26, **dadurch gekennzeichnet, dass** die hergestellte Bearbeitungskontur anschließend an das Funkenerodieren durch spanende oder nicht spanende Bearbeitungsverfahren weiterbearbeitet wird.

28. Verfahren zur Herstellung einer Ausweichbohrung (48) in einemBohrstrangteil (47), welche zwei gerade Spülbohrungen (39, 41) verbindet,
**dadurch gekennzeichnet,**
**dass** die Ausweichbohrung (48) bogenförmig verlaufend durch Funkenerosion hergestellt wird.

29. Verfahren nach Anspruch 28, **dadurch gekennzeichnet, dass** die Ausweichbohrung (48) durch ein Verfahren nach den Ansprüchen 24 bis 27 hergestellt wird.

30. Verwendung eines Funkenerosions-Werkzeugs (101, 102) nach einem der Ansprüche 1 bis 23 zur Herstellung eines bogenförmiges Lochs (48) in einem Bohrstrangteil (47), welches zwei gerade Spülbohrungen (39, 41) verbindet.
